(19) Europäisches Patentamt
European Patent Office
Office européen des brevets

(11) Publication number: **0 033 022**
**B1**

# (12) EUROPEAN PATENT SPECIFICATION

(45) Date of publication of patent specification: **19.06.85**

(51) Int. Cl.[4]: **C 08 F 10/00,** C 08 F 4/64

(21) Application number: **80201234.4**

(22) Date of filing: **23.12.80**

## (54) Process for the preparation of a solid catalytic titanium component, and process for the polymerization of alkenes-1 with application of such a titanium component.

(30) Priority: **28.12.79 NL 7909333**

(43) Date of publication of application:
**05.08.81 Bulletin 81/31**

(45) Publication of the grant of the patent:
**19.06.85 Bulletin 85/25**

(84) Designated Contracting States:
**AT BE DE FR GB IT NL SE**

(56) References cited:
**FR-A-2 283 909**
**FR-A-2 320 955**
**FR-A-2 353 568**

(73) Proprietor: **STAMICARBON B.V.**
**Postbus 10**
**NL-6160 MC Geleen (NL)**

(72) Inventor: **Loontjens, Jacobus Antonius**
**Synagogeplantsoen 76**
**6231 KK Meerssen (NL)**

(74) Representative: **Hoogstraten, Willem Cornelis Roeland et al**
**OCTROOIBUREAU DSM Postbus 9**
**NL-6160 MA Geleen (NL)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 033 022 B1

## Description

The invention relates to a process for the preparation of a solid catalytic titanium component for the polymerization of alkenes-1 and for the copolymerization of alkenes-1 with each other or with ethylene, involving preparation of the composition of a) a complex of a titanium halide compound of tetravalent titanium and an ester of a carboxylic acid and b) an at least virtually anhydrous metal halide and to a process for the polymerization of alkenes-1 and for the copolymerisation of alkenes-1 with each other or with ethylene with application of such a titanium component.

Such a process is known from the British patent specification No. 1.387.890. In the polymerization, said catalytic titanium component is used in combination with an organoaluminium component consisting of the product of an addition reaction between a tri-alkyl aluminium compound and an ester of a carboxylic acid. Such a catalyst system is adequately active in the polymerization of propylene, butylene-1, 4-methyl pentylene-1 and other alkenes-1, but the stereospecificity is unsatisfactory.

According to the Dutch patent application No. 7509735, laid open for inspection, such a titanium component is used in combination with an organoaluminium component containing the product of an addition reaction between a tri-alkyl aluminium compound and an ester of carboxylic acid, besides a di-alkyl aluminium halide. This gives very high activity in combination with improved stereospecificity.

A serious problem with the catalytic titanium component prepared by the known method is presented by the high halogen content of the polymer obtained through polymerization with application of said titanium component as catalyst component. The high halogen content may be the cause of considerable corrosivity of the polymer for the costly processing equipment, such as injection-moulding machines and extruders, and is therefore highly undesirable. So far, it has only been possible to reduce the halogen content of the polymer at the cost of the stereospecificity or of the activity of the catalyst, or even both.

The applicant now has found that a polymer with a considerably reduced halogen content can be obtained with preservation of both a high stereospecificity and a high activity of the catalyst if the catalytic titanium component is pre-treated in a specific manner.

According to the inventin, a process for the preparation of a solid titanium component for a catalyst for the polymerization of alkenes-1 and for the copolymerization of alkenes-1 with each other or with ethylene, comprises the preparation of a composition containing the components a) and b), wherein a) is a complex of a titanium halide compound of tetravalent titanium and an ester of a carboxylic acid and b) is an essentially anhydrous metal halide, and is characterized in that said composition, as a suspension in an inert organic liquid, is treated with an organic aluminium compound c) which is soluble in the liquid, and the solid substance obtained is separated off from the liquid.

It is observed that the Dutch Patent Specification No. 7708593, laid open for inspection, describes a process for the preparation of a solid catalyst component for the polymerization of alkenes-1 in which an adduct of a magnesium di-halide and an electron donor is prepared, the adduct is decomposed to form a magnesium di-halide product by reacting it with an organic aluminium compound, the resultant magnesium di-halide product is separated off, and is then reacted with a halogenated titanium compound which is soluble in hydrocarbons. It is evident that the product thus obtained is fully different from that obtained by the method according to the invention, in which the solid substance is not contacted with a halogenated titanium compound after being separated off. The said publication, accordingly, is not at all concerned with preparation of polymers with a substantially reduced halogen content with preservation of the good stereospecificity and activity of the catalyst.

The titanium component obtained by the method according to the invention lends the polymerization catalyst improved stereospecificity in combination with very high activity. With this catalyst, polymers, for instance polypropylene, can be produced with a very low halogen content and a very low titanium content, so that a washing step in the polymerization can be omitted. The polymer also has a good particle size and a good particle size distribution. The polymer thus has good processing properties and is little corrosive for the processing equipment.

In the composition of a) and b) every titanium halide compound of tetravalent titanium may be used, including compounds in which some of the titanium valencies have been taken up by bonds other than to halogen atoms. The halogen in the titanium halide compound is preferably chlorine, but may also be bromine and/or iodine, for instance. Examples of halogenated titanium compounds are $TiCl_4$, $TiBr_4$, $TiI_4$ and Ti $(isobutoxy)_2Cl_2$.

$TiCl_4$ is particularly suitable.

For application in multi-stage polymerization processes, especially those in which more than half an hour is normally required for polymerization in the first stage before a second stage is started, it is of special advantage if the titanium halide compound used is a titanium halide phenolate of the formula $Ti_nX_aA_b$, in which X represents a halogen atom and A the acid radical of a phenol, n is an integer, at least 1, and a and b are such numbers that a/n and b/n are both 1—3, on the understanding that (a+b)/n is equal to 4. The rate of decline in the activity of the catalyst system is then substantially reduced, so that in multi-stage polymerization processes, for instance so-called block copolymerizations, in which in the first stage for instance for more than

half an hour propylene, butylene-1, 4-methyl pentylene-1 or another alkene-1 with at least 3 carbon atoms per molecule is polymerized, in some cases in the presence of a minor quantity of ethylene, after which in a second stage another monomer or a monomer mixture of a different composition is polymerized in the presence of the polymer formed in the first stage, so that blocks of different monomer composition may be present in one polymer molecule, the resultant proportion of such block copolymer is considerably higher.

The phenolate may be, for instance, the acid radical derived from unsubstituted phenol or from a phenol substitute with one or more alkyl groups or alkoxy groups with for instance 1—6 carbon atoms per group, for instance cresol, methoxy phenol, xylenol, ethyl phenol, propyl phenol, octyl phenol, dibutyl phenol, cumyl phenol or naphthol. Cresolates and methoxy phenolates are particularly suitable, while o-cresolate in particular offers the advantage of particularly high stereospecificity of the catalyst system. The benzene nucleus of the phenolate may contain other substituents which are non-detrimental in the polymerization reaction, such as one or more halide substituents. The phenolate groups may have, for instance, 6 to 18 carbon atoms, preferably 6—12 carbon atoms.

The halide: phenolate ratio in the titanium halide phenolate is preferably between 1:1 and 3:1. Besides the titanium halide phenolate, a phenolate-free titanium halide can be used, if so desired. The value of n is mostly 1, but can also be 2 or higher, especially if a polyphenolate is used.

Specific examples of titanium halide phenolates to be used in the composition of a) and b) in the process according to the invention are titanium (IV) trichloride mono-phenolate, titanium (IV) dichloride diphenolate, titanium (IV) tri-chloride mono-p-cresolate, titanium (IV) trichloride mono-o-cresolate, titanium (IV) mono-chloride tri-l-naphtholate, titanium (IV) tri-chloride mono-(p-chlorophenolate), titanium (IV) tribromide mono-p-cresolate, titanium (IV) tribromide mono (xylenolate-isomer mixture) and titanium (IV) monoiodide trianisolate. Such compounds can be obtained for instance through conversion of the relevant titanium halide with the stoichiometric quantity of the relevant phenol, in which reaction the relevant hydrogen halide is liberated, or through double conversion of a titanium halide with a metal phenolate, for instance an alkali metal phenolate.

In the composition of a) and b), the titanium halide compound is present as a complex with an ester of a carboxylic acid. The ester may contain, for instance, 2—40, in particular 2—18, carbon atoms per molecule. The acid component of the ester will mostly contain 1—9 carbon atoms per molecule or is a natural fatty acid, while the alcohol component of the ester will mostly contain 1—6 carbon atoms per molecule.

Examples of suitable esters are methyl formiate, cyclohexyl formiate, ethyl acetate, vinyl acetate, amyl acetate, 2-ethyl hexyl acetate, cyclohexyl acetate, ethyl propionate, amyl propionate, methyl butyrate, ethyl valeriate, methyl chloroacetate, ethyl dichloroacetate, methyl methacrylate, ethyl acrylate, n-butyl acrylate, ethyl crotonate, di-methyl maleate, ethyl cyclohexane carboxylate, methyl benzoate, ethyl benzoate, i-butyl benzoate, octyl benzoate, cyclohexyl benzoate, phenyl benzoate, benzyl benzoate, phenyl ethyl benzoate, methyl toluate, ethyl toluate, i-amyl toluate, methyl anisate, ethyl anisate, γ-butyrolactone, ε-caprolactone, coumarin, phthalide and ethylene carbonate. Particular preference is given to esters derived from aromatic acids, in particular esters of benzoic acid, substituted or not with alkyl or alkoxy groups. Alkyl esters with 1—4 carbon atoms per alkyl group, in particular methyl or ethyl esters of benzoic acid, o- or p-toluene carboxylic acid, p-methoxy benzoic acid of phthalic acid are preferred in particular.

As metal halide b) to be applied, a magnesium halide is particularly preferred, essentially anhydrous and preferably also essentially free of magnesium oxide.

The expressions 'essentially anhydrous' and 'essentially free of magnesium oxide' are understood to mean here that the concentration of water and magnesium oxide, respectively, in the carrier material is insignificant, i.e. as regards water less than 0.2% by wt., preferably at most 0.1% by wt., and as regards magnesium oxide less than 0.1, preferably at most 0.01, calculated as mgeq of base titratable with dilute strong acid, for instance 0.1 N hydrochloric acid, per g of carrier material.

The magnesium halide may further contain minor quantities of other metal ions, for instance sodium, tin, silicon or germanium. It may have been prepared by any known method, for stance by dehydration of hydrated magnesium halide or by conversion of organic magnesium compounds, such as Grignard's reagents or di-alkyl magnesium compounds, with, for instance, hydrogen chloride or hydrogen bromide or an alkyl chloride or bromide.

The most preferred magnesium halides are magnesium bromide and, preferably, magnesium chloride. Preferably, an essentially magnesiumoxide-free magnesium halide is used which may have been prepared by heating water and/or magnesiumoxide-containing magnesium halide in a gas flow of carbon halide vapour, for instance vapour of carbon tetrachloride and/or a mixture of carbon monoxide and halogen in a mixing ratio of between, for instance, 0.1:1 and 10:1, for, for instance, 10—13 hours at a temperature of 575—1000 K.

The metal halide b) may also contain a combination of a magnesium halide and an aluminium halide. The magnesium halide and the aluminium halide, for instance, may be combined by grinding them together.

The method according to the invention is of very particular advantage when a metal halide is applied obtained by conversion of a combination

of an organic aluminium compound and an organic magnesium compound, for instance by reacting with hydrogen chloride or an alkyl chloride. This permits of achieving a particularly great reduction of the halogen content of the polymer prepared with the catalyst component.

The conversion of the combination of an organic aluminium compound and an organic magnesium compound into the corresponding metal halide may be effected, for instance, by precipitation of the metal halide from a solution of the organic metal compounds in a suitable solvent. Suitable precipitation agents are, for instance, the hydrogen halides and aliphatic halogen compounds. The halogen is preferably chlorine, but may also be, for instance, bromine or iodine.

The hydrogen halides may be introduced as water-free gas, for instance.

As aliphatic halogen compounds, aliphatic halogen hydrocarbons may be used, for instance, with, for instance, 1—8 carbon atoms per molecule, in particular alkyl chlorides. Examples are methyl chloride, methylene chloride, chloroform, ethyl bromide, ethylene di-chloride, i-propyl chloride, n-butyl iodide, and the like.

Free halogens and interhalogen compounds, for instance $Cl_2$, $Br_2$, $I_2$ ICl, $ICl_3$ or BrCl, may also be used as precipitation agent.

The organic aluminium compound preferably contains one or more hydrocarbon groups bonded directly to the metal. The hydrocarbon groups preferably contain 1—10 carbon atoms.

Examples are trialkyl or trialkenyl aluminium compounds, for instance triethyl aluminium, tripropyl aluminium, triisobutyl aluminium, triisoprenyl aluminium, trihexyl aluminium and trioctyl aluminium; dialkyl aluminium hydrides, for instance diethyl aluminium hydride and diisobutyl aluminium hydride; dialkyl aluminium halides, in particular a chloride or a bromide, diethyl aluminium chloride and bromide being particularly suitable, but, for instance, di-n-butyl aluminium chloride or methyl-n-butyl aluminium chloride may also be used; and (mono)alkyl aluminium dihalides, for instance ethyl aluminium dichloride, n-butyl aluminium dichloride or n-hexyl aluminium dibromide. If a halogen-containing organic aluminium compound is used, the halogen preferably is the same as that in the precipitation agent used. Trialkyl aluminium compounds are preferable.

The organic magnesium compound may be, for instance, a dialkyl magnesium or an alkyl magnesium halide. The hydrocarbon groups preferably contain 1—10 carbon atoms again. Examples are ethyl magnesium or an alkyl magnesium halide. The hydrocarbon groups preferably contain 1—10 carbon atoms again. Examples are ethyl magnesium chloride, n-butyl magnesium chloride, i-propyl magnesium bromide, n-decyl magnesium diode, di-n-butyl magnesium, di-i-amyl magnesium and di-n-octyl magnesium.

The conversion of the organic metal compounds into the metal halide may be effected in the absence of a solvent, but it is preferable for the metal halide to be precipitated from a solution of the organic metal compounds in a suitable solvent. Examples of suitable solvents are aliphatic, cycloaliphatic, aromatic and mixed aromatic/aliphatic hydrocarbons, with 3—8 carbon atoms per molecule, preferably those which are inert under the reaction conditions, for instance butane, i-butane, n-hexane, n-heptane, cyclohexane, benzene, toluene and the xylenes. Halogenated hydrocarbons may also be used.

The temperature during the conversion may be, for instance, 250—425 K. The pressure is not a critical factor and is, for instance, 10—1000 kPa.

In a suitable mode of realization of the process according to the invention, first an alkyl halide, for instance n-butyl chloride, is converted into the alkyl magnesium halide with metallic magnesium in a hydrocarbon solvent, for instance n-heptane, in a manner known in itself, and subsequently or simultaneously a suitable aluminium compound, for instance a trialkyl aluminium such as tri-n-butyl aluminium, is applied, so that a dissolved complex consisting of an organoaluminium compound and an alkyl magnesium compound is formed. Instead of a trialkyl aluminium, it is also possible to add another organic aluminium compound, for instance an alkoxy aluminium compound, an alkyl aluminium halide or the aluminium salt of an organic acid, as well as metallic aluminium or an aluminium halide, for instance aluminium chloride, which is converted in situ into an aluminium compound forming the complex. The resultant solution of an organoaluminium/alkyl magnesium complex is subsequently treated with a gaseous hydrogen halide, for instance hydrogen chloride, or with an alkyl halide, so that the metal halide is precipitated. The precipitation can also be effected by means of a heat treatment, for instance by heating at 300—500 K.

The aluminium:magnesium molar ratio in the metal halide may be, for instance, 1.99 to 1:1. Higher molar ratios are possible, but are not advantageous. Preferably, this molar ratio is 1:20 to 1:1, more in particular 1:5 to 1:2.

If so desired, it is possible to take up further metal ions in the metal halide, for instance sodium, tin, silicon or germanium.

The composition of a) and b) may be prepared in any known manner. Preferably, first a complex of the titanium halide compound and the electron donor is formed.

The complexes of the titanium halide compound and the electron donor may be obtained in any known manner, for instance by bringing the components of the complex into contact with each other.

The titanium halide compound may be combined with the metal halide b) in any known manner, for instance by simple mixing, preferably by grinding together, for instance in a ball mill, a vibration mill or a beater mill. The mixing may be done in the co-presence of an inorganic or organic filler, for instance lithium chloride,

calcium carbonate, calcium chloride, chromium (II) chloride, barium chloride, sodium sulphate, sodium carbonate, titanium dioxide, sodium tetraborate, calcium orthophosphate, calcium sulphate, barium carbonate, aluminium sulphate, borium trioxide, aluminium oxide, silicon oxide, polyethylene, polypropylene or polystyrene. The filler may also have been taken up in the metal halide beforehand. It is possible to first form a complex of the titanium halide compound and the electron donor and to combine it with the metal halide, or also to first combine the non-complexed titanium halide compound with the metal halide and add the electron donor afterwards. It may be advantageous to treat the titanium component with a halogen or an interhalogen compound, for instance bromine, preferably in the absence of a non-active solvent.

The titanium content of the composition a) and b) and also of the finished titanium component usually is between 0.1 and 10% by wt. The titanium:magnesium:aluminium weight ratio preferably is 1:(0.5—20):(0.1—5), more in particular 1:(0.5—2.5):(0.2—1). The ester is present in the titanium component in a quantity of, for instance, 0.1 to 5 molecules per titanium atom. A typical example of the various contents in the composition of a) and b) and also of the titanium component, although varying in dependence on the conditions of the preparation of the catalyst, is: 2—10% by wt. titanium, 16—25% by wt. magnesium, 1.5—4.0% by wt. aluminium, 45—65% by wt. halogen and 5—25% by wt. ester.

In the process according to the invention, the resultant composition of a) and b), as a suspension in an inert organic liquid, is treated with an organic aluminium compound c) with preferably 1—10 carbon atoms per organic group and soluble in the liquid. Examples of suitable organic aluminium compounds are trialkyl or trialkenyl aluminium compounds, for instance triethyl aluminium, tripropyl aluminium, triisobutyl aluminium, triisoprenyl aluminium, trihexyl aluminium and trioctyl aluminium; alkyl aluminium compounds in which a number of the aluminium atoms are connected through an oxygen or nitrogen atom, for instance

$$(C_2H_5)_2AlOAl(C_2H_5)_2,$$

$$(i\text{-}C_4H_9)_2AlOAl(i\text{-}C_4H_9)_2 \text{ or}$$

$$(C_2H_5)AlNHAl(C_2H_5)_2;$$

dialkyl aluminium hydrides, such as diethyl aluminium hydride or diisobutyl aluminium hydride; alkyl aluminium halides, in particular a chloride or a bromide, diethyl aluminium chloride and bromide being particularly suitable, while also other dialkyl aluminium halides with preferably 1—10 carbon atoms in the alkyl group, such as for instance di-n-butyl aluminium chloride and methyl-n-butyl aluminium chloride can be used; and dialkyl aluminium alkoxides or phenoxides, for instance diethyl ethoxy aluminium or diethyl phenoxy aluminium.

The treatment is effected at a temperature of for instance 250—425 K, preferably 290—340 K. The pressure is not a critical factor and is, for instance 10—1000 kPa. Examples of suitable inert organic liquids are aliphatic, cycloaliphatic, aromatic and mixed aromatic/aliphatic hydrocarbon with 4—12 carbon atoms per molecule, for instance butane, isobutane, n-hexane, n-heptane, cyclohexane, benzene, toluene and the xylenes. Halogenated hydrocarbons may also be used. Preferably, the same inert liquid is used as in the polymerization. The concentration of the organic aluminium compound in the liquid is, for instance, 0.1—100 mmole/l; preferably 1—20 mmole/l; the Al:Ti molar ratio between the organic aluminium compound and the titanium compound is, for instance, 1:1 to 500:1. The treatment time may be, for instance, 1—60 minutes. Longer times are possible, but are not advantageous.

After the treatment of the composition of a) and b) with the organic aluminium compound, the resultant solid is separated off and recovered as finished titanium component.

In the finished polymerization catalyst, the titanium component is used in combination with an organometal component derived from a metal of one of the groups I—III of the Periodic Sytem with a hydrocarbon group bonded directly to the metal. Examples are trialkyl aluminium compounds, alkyl aluminium alkoxides, alkyl aluminium hydrides, alkyl aluminium halides, dialkyl zinc compounds and dialkyl magnesium compounds. Of those, the organoaluminium compounds are particularly suitable. Examples of the organoaluminium compounds are trialkyl or trialkenyl aluminium compounds, for instance triethyl aluminium, tripropyl aluminium, triisobutyl aluminium, triisoprenyl aluminium, trihexyl aluminium and trioctyl aluminium; alkyl aluminium compounds, in which a number of the aluminium atoms are connected through an oxygen or nitrogen atom, for instance

$$(C_2H_5)_2AlOAl(C_2H_5)_2,$$

$$(i\text{-}C_4H_9)_2AlOAl(i\text{-}C_4H_9)_2 \text{ or}$$

$$(C_2H_5)_2AlNHAl(C_2H_5)_2;$$

dialkyl aluminium hydrides, such as diethyl aluminium hydride or diisobutyl aluminium hydride; dialkyl aluminium halides, in particular a chloride or a bromide, diethyl aluminium chloride and bromide being particularly suitable, but other dialkyl aluminium halides with preferably 1—10 carbon atoms in the alkyl group, such as for instance d-n-butyl aluminium chloride and methyl-n-butyl aluminium chloride, may be used; and dialkyl aluminium alkoxides or phenoxides, for instance diethyl ethoxy aluminium or diethyl phenoxy aluminium. The trialkyl aluminium compounds deserve most preference.

The organometal compound may also contain a

trialkyl aluminium compound as well as a dialkyl aluminium halide or a mixture of a dialkyl magnesium compound and a monoalkyl aluminium dihalide. The alkyl groups of the organo-aluminium compounds preferably contain 1—10 carbon atoms each. The alkyl groups of the dialkyl magnesium compound preferably contain 1—10 carbon atoms each or are a palmityl or stearyl group. Examples of suitable dialkyl magnesium compounds are diethyl magnesium, di-n-butyl magnesium, di-n-hexyl magnesium and di-n-octyl magnesium. The monoalkyl aluminium halide preferably is a chloride or a bromide. Ethyl aluminium dichloride or dibromide is particularly suitable, but also other monoalkyl aluminium dihalides with preferably 1—10 carbon atoms in the alkyl group may be used, such as isopropyl aluminium dichloride, n-butyl aluminium dibromide or n-octyl aluminium dichloride. The molar ratio between the dialkyl magnesium compound and the monoalkyl aluminium dihalide may be between, for instance, 0.1 and 1, preferably between 0.3 and 0.6. Too high a molar ratio leads to insufficiently stereospecific catalysts, while insufficient catalyst activity results if it is too low.

The organometal component preferably consists of a complex of an organic metal compound, in particular a trialkyl aluminium compound, with an ester of an oxygen-containing organic acid. Suitable esters are the same esters as may be used in the titanium component, in particular again the esters of aromatic carboxylic acids. For brevity's sake, reference is made to the foregoing. Preferably, part of the organic metal compound, for instance 50—80%, is present in a non-complexed condition.

The Al:Ti atom ratio is generally between 10 and 1000; the molecule-atom ratio of fully bonded Lewis base in the catalyst to Ti is in general between 5 and 500.

The process according to the invention is applied in particular in the stereospecific polymerization of alkenes-1 with 3—6 carbon atoms per molecule, such as propylene, butylene-1, 4-methyl pentylene-1 and hexylene-1, and in the copolymerization of these alkenes-1 with each other and/or with ethylene. Copolymers with a random arrangement of the various monomer units as well as block copolymers can be produced. If ethylene is taken as a comonomer, it is usual to incorporate minor quantities of it in the polymer, for instance at most 30% by wt, more in particular between 1 and 15% by wt. The process according to the invention is of importance in particular for production of isotactic polypropylene, random copolymers of propylene with minor quantities of ethylene, and block copolymers of propylene and ethylene. For the production of block copolymers, any desired sequence of monomer addition may be applied.

The circumstances under which the polymerization reaction with the catalytic titanium component according to the invention is carried out do not deviate from those known in the art. The reaction may be carried out in the gas phase or in the presence of a liquid. The liquid may be inert or also a monomer in liquid form. Examples of suitable liquids are aliphatic, cycloaliphatic, aromatic and mixed aromatic/aliphatic hydrocarbons with 3—8 carbon atoms per molecule, such as propylene, butylene-1, butane, isobutane, n-hexane, n-heptane, cyclohexane, benzene, toluene and the xylenes.

In the case of polymerization in the liquid phase, it is preferable for the concentration of the titanium component to be set at about 0.001—0.5 mmole, calculated as titanium atom, and the concentration of the organometal compound at about 0.1—50 mmole, both per litre of liquid phase.

The polymerization temperature is mostly between 190 and 475 K, preferably between 310 and 375 K. The pressure may be, for instance, between 100 and 3000 kPa.

If so desired, it is possible to regulate the molecular weight of the polymer during the polymerization, for instance by operating in the presence of hydrogen or another known molecular weight regulator.

The polymerization reactor may be carried out as a batch process or as a continuous process.

The invention will now be elucidated by means of the following non-restrictive examples and the comparative experiments.

Example I

A. Preparation of the catalytic titanium component

At 273 K, 6.5 ml of water-free ethyl benzoate (EB), dissolved in 75 ml of water-free gasoline, is added to a solution of 5 ml of $TiCl_4$ in 125 ml of gasoline, washed with dry nitrogen. The resultant precipitate of $TiCl_4$ . EB is separated off by filtration and subsequently dried.

100 ml of a solution containing 0.3 mole of dibutyl magnesium and 0.03 mole of triethyl aluminium per litre of hexane is introduced into a three-neck flask, provided with a mechanical agitator and a reflux condensor, and flushed with dry nitrogen. A flow of dry HCl gas is introduced, resulting in the formation of a yellowish precipitate. During the reaction, the temperature rises. The gas flow is maintained for 1 hour after the temperature has reached its maximum.

The precipitate of metal chloride is separated off by filtration, washed with hexane and dried. The composition of this product is: 20.1% of Mg, 1.9% of Al, 61.1% of Cl and 16.5% of organic material (in % by wt.)

3.1 g of the metal chloride obtained and 3.4 g of the $TiCl_4$ . EB complex obtained are successively introduced into a stainless steel ball mill with 8 balls. This mixture is ground for 17 hours in a nitrogen atmosphere.

0.15 g of the ground solid is suspended in 50 ml of heptane. 5 mmole of triisobutyl aluminium (TIBA) is added as a 20 wt.% solution in heptane and this suspension is stirred for 10 minutes at room temperature. The solution assumes a very

dark colour. The top liquid is removed and the solid product then washed once with 10 ml of heptane.

B. Polymerization

1.3 l of gasoline, 300 ml of $H_2$, 1.25 ml of triisobutyl aluminium, 0.14 ml of ethyl benzoate and the titanium component obtained as described under A are introduced into a stainless steel reactor provided with a mechanical agitator and flushed with dry nitrogen. The pressure is raised to and maintained at 800 kPa by leading in propylene. The temperature is raised to 333 K. After a polymerization time of 2 hours, the supply of propylene is stopped, the pressure is released and the polymer suspension is removed from the reactor.

By filtration, 498 g of polypropylene is isolated. The dissolved polymer content is 4.0%. The bulk weight is 0.34 g/cm$^3$, the polymer contains 7 ppm Ti and 85 ppm Cl.

Example II

A. Preparation of the catalytic titanium component

0,15 g of the ground solid (composition of a) and b)) obtained according to example IA is suspended in 50 ml of heptane. 5 mmole of diethyl aluminium chloride (DEAC) is added as a 20 wt.% solution in heptane and this suspension is stirred for 10 minutes at room temperature. The solution assumes a very dark colour. The top liquid is removed and the solid product then washed once with 10 ml of heptane.

B. Polymerization

The polymerization is carried out analogously to that in example IB, but with the titanium component obtained in IIA.

At the filtration of the polymer suspension, 497 g of polypropylene is isolated now. The soluble polymer content is 4.0%. The bulk weight is 0.34 g/cm$^3$; the polymer contains 7 ppm Ti and 73 ppm Cl.

Comparative experiment A

A. Preparation of the catalytic titanium component

The titanium component is prepared analogously to example IA, but now the treatment with TIBA is dispensed with.

B. Polymerization

The polymerization is carried out analogously to example IB, but with the titanium component obtained in A.A.

At the filtration of the polymer suspension, 512 g of polypropylene is isolated now, and the soluble polymer content is 3.9%. The bulk weight is 0.32 g/cm$^3$. The polymer contains 12 ppm Ti and 170 ppm Cl.

Comparative experiment B

A. Preparation of the catalytic titanium component

7 g of the dried precipitate of metal chloride obtained in example IA is suspended in 100 ml of hexane. 17 mmole of TIBA in undiluted form and 4 mmole of EB as a 20 wt.% solution in hexane are added and this suspension is stirred for 15 minutes at room temperature. The solution does not change colour. The top liquid is removed and the solid product then washed two times with 100 ml of hexane. The product is blown dry with nitrogen, dried in the vacuum of an oil pump during half an hour at 333 K and at last pulverized in a mortar.

2.8 g of the obtained pretreated metal chloride and 2.2 g of the $TiCl_4$ . EB-complex obtained in example IA are ground together in a stainless steel ball mill with 8 balls during 17 hours in a nitrogen atmosphere.

B. Polymerization

The polymerization is carried out analogously to example IB, but with 0.20 g of the titanium component obtained under B.A. The amount of TIBA is 1.65 ml and 1.32 ml of a 20 wt.% solution of EB in hexane is applied.

The yield of polypropylene is 140 g. The soluble polymer content is 5.3%. The bulk weight is 0.29 g/cm$^3$.

Comparative experiment C

A. Preparation of the catalytic titanium component

The dried precipitate of metal chloride obtained in example IA is ground in a ball mill during 4 hours under nitrogen. From this ground substance 5 grams are suspended in 250 ml of hexane. 300 mmole of TIBA and 60 mmole of EB, both in undiluted form, are added and this suspension is stirred for 10 minutes at room temperature. The solution does not change colour. The top liquid is removed and the solid product then washed three times with 100 ml of hexane. The product is blown dry with nitrogen and dried in the vacuum of an oil pump during half an hour at 333 K.

2.9 g of the obtained pretreated metal chloride and 2.3 g of the $TiCl_4$ . EB-complex obtained in Example IA are ground together in a stainless steel ball mill during 17 hours in a nitrogen atmosphere.

B. Polymerization

The polymerization is carried out analogously to example IB, but with 1.4 ml of TIBA, 1.12 ml of 20 wt.% solution of EB in hexane and 0.175 g of the titanium component obtained under C.A.

The yield of polypropylene is 82 gram. The soluble polymer content is 5.9%. The bulk weight is 0.26 g/cm$^3$.

**Claims**

1. Process for the preparation of a solid titanium component for a catalyst for the polymerization of alkenes-1 and for the copolymerization of alkenes-1 with each other or with ethylene, comprising the preparation of a composition containing the components a) and b), wherein a) is a complex of a titanium halide compound of tetravalent titanium and an ester of a carboxylic acid and b) is an essentially anhydrous metal halide, characterized in that said composition, as a suspension in an inert organic liquid, is treated with an organic aluminium compound c) which is soluble in the liquid, and the solid substance obtained is separated off from the liquid.

2. Process according to claim 1, characterized in that the titanium halide compound in complex a) is $TiCl_4$.

3. Process according to claim 1, characterized in that the titanium halide compound is a titanium halide phenolate of the formula $Ti_nX_aA_b$, in which X is a halogen atom and A the acid radical of a phenol, n is an integer, at least 1, and a and b are such numbers that a/n and b/n are both 1—3, on the understanding that (a+b)/n is equal to 4.

4. Process according to any one of the claims 1—3, characterized in that the metal halide b) has been obtained by precipitation of the corresponding metal halide from a solution of the combination of an organic aluminium compound and an organic magnesium compound.

5. Process according to any one of the claims 1—4, characterized in that the composition of a) and b) contains titanium, magnesium and aluminium in a weight ratio of 1:(0.5—20):(0.1—5).

6. Process according to claim 5, characterized in that the titanium:magnesium:aluminium weight ratio is 1:(0.5—2.5):(0.2—1).

7. Process according to any of the claims 1—6, characterized in that the organic aluminium compound c) is a trialkyl aluminium compound.

8. Process according to any one of the claims 1—6, characterized in that the organic aluminium compound c) is a dialkyl aluminium halide.

9. Process for the polymerization of alkenes-1 and for the copolymerization of alkenes-1 with each other or with ethylene with application of a catalyst system comprising a solid catalytic titanium component and an organometal component derived from a metal of one of the groups I—III of the Periodic System of the Elements, characterized in that a titanium component is applied which has been prepared by the process according to any one of the claims 1—8.

10. Process according to claim 9, characterized in that the organometal component contains a complex of an organic metal compound with an ester of an oxygen-containing organic acid.

**Patentansprüche**

1. Verfahren zur Herstellung einer festen Titankomponente für einen Katalysator für die Polymerisation von Alkenen-1 und für die Copolymerisation von Alkenen-1 miteinander oder mit Äthylen, umfassend die Herstellung einer Zusammensetzung der Komponenten a) und b), worin a) ein Komplex einer Titanhalogenidverbindung von vierweitigem Titan und b) ein im wesentlichen wasserfreies Metallhalogenid ist, dadurch gekennzeichnet, daß diese Zusammensetzung, als eine Suspension in einer inerten organischen Flüssigkeit, mit einer organischen Aluminiumverbindung c) behandelt wird, welche in der Flüssigkeit löslich ist, und die erhaltene feste Substanz von der Flüssigkeit abgetrennt wird.

2. Verfahren nach Anspruch 1, dadurch gekennzeichnet, daß die Titanhalogenidverbindung im Komplex a) $TiCl_4$ ist.

3. Verfahren nach Anspruch 1, dadurch gekennzeichnet, daß die Titanhalogenidverbindung ein Titanhalogenid-phenolat der Formel $Ti_nX_aA_b$ ist, worin X ein Halogenatom und A den Säurerest eines Phenols darstellt, n eine ganze Zahl, mindestens 1, ist und a und b solche Zahlen sind, daß a/n und b/n beide 1—3 sind, unter der Bedingung, daß (a+b)/n gleich 4 ist.

4. Verfahren nach einem der Ansprüche 1 bis 3, dadurch gekennzeichnet, daß das Metallhalogenid b) durch Ausfällung des entsprechenden Metallhalogenids aus einer Lösung der Kombination einer organischen Aluminiumverbindung und einer organischen Magnesiumverbindung erhalten worden ist.

5. Verfahren nach einem der Ansprüche 1 bis 4, dadurch gekennzeichnet, daß die Zusammensetzung von a) und b) Titan, Magnesium und Aluminium im Gewichtsverhältnis von 1:(0,5—20):(0,1—5) enthält.

6. Verfahren nach Anspruch 5, dadurch gekennzeichnet, daß das Gewichtsverhältnis von Titan:Magnesium:Aluminium 1:(0,5—2,5):(0,2—1) ist.

7. Verfahren nach einem der Ansprüche 1 bis 6, dadurch gekennzeichnet, daß die organische Aluminiumverbindung c) eine Trialkylaluminiumverbindung ist.

8. Verfahren nach einem der Ansprüche 1 bis 6, dadurch gekennzeichnet, daß die organische Aluminiumverbindung c) ein Dialkylaluminiumhalogenid ist.

9. Verfahren zur Polymerisation von Alkenen-1 und zur Copolymerisation von Alkenen-1 miteinander oder mit Äthylen unter Verwendung eines Katalysatorsystems umfassend eine feste Titankatalysatorkomponente und eine Organometallkomponente abgeleitet von einem Metall aus einer der Gruppen I—III des Periodensystems, dadurch gekennzeichnet, daß eine Titankomponente verwendet wird, welche nach dem Verfahren gemäß einem der Ansprüche 1 bis 8 hergestellt worden ist.

10. Verfahren nach Anspruch 9, dadurch gekennzeichnet, daß die Organometallkomponente einen Komplex einer organischen Metallverbindung mit einem Ester einer sauerstoffhältigen organischen Säure enthält.

**Revendications**

1. Procédé de fabrication d'un constituant solide de titane pour un catalyseur de polymérisation d'alcènes-1 et pour la copolymérisation d'alcènes-1 les uns avec les autres ou avec

l'éthylène, comprenant la fabrication d'une composition contenant les constituants a) et b), dans lequel a) est un complexe d'un composé d'halogénure de titane tétravalent et d'un ester d'un acide carboxylique et b) est un halogénure métallique essentiellement anhydre, caractérisé en ce que ladite composition, sous forme de suspension dans un liquide inerte, est traitée avec un composé d'aluminium organique c) qui est soluble dans le liquide, et en ce que la substance obtenue est séparée du liquide.

2. Procédé selon la revendication 1, caractérisé en ce que le composé d'halogénure de titane du complexe a) est $TiCl_4$.

3. Procédé selon la revendication 1, caractérisé en ce que le composé d'halogénure de titane est un phénolate d'halogénure de titane de formule $Ti_nX_aA_b$, dans laquelle X est un atome d'halogène et A le radical acide d'un phénol, n est un nombre entier, au moins égal à l, et a et b sont des nombres tels que a/n et b/n soient tous les deux 1—3, étant entendu que (a+b)/n est égal à 4.

4. Procédé selon l'une quelconque des revendications 1 à 3, caractérisé en ce que l'halogénure métallique b) est obtenu par précipitation de l'halogénure métallique correspondant dans une solution de la combinaison d'un composé d'aluminium organique et d'un composé magnésien organique.

5. Procédé selon l'une quelconque des revendications 1 à 4, caractérisé en ce que la composition de a) et b) contient du titane, du magnésium et de l'aluminium dans un rapport en poids de 1:(0,5—20):(0,1—5).

6. Procédé selon la revendication 5, caractérisé en ce que le rapport en poids titane:magnésium:aluminium est de 1:(0,45—2,5):(0,2—1).

7. Procédé selon l'une quelconque des revendications 1—6, caractérisé en ce que le composé d'aluminium organique c) est un composé trialkylaluminique.

8. Procédé selon l'une quelconque des revendications 1 à 6, caractérisé en ce que le composé d'aluminium organique c) est un halogénure de dialkylaluminium.

9. Procédé de polymérisation d'alcènes-1 et de copolymérisation d'alcènes-1 les uns avec les autres ou avec l'éthylène en appliquant un système catalytique comprenant un constituant catalytique de titane et un constituant organométallique dérivé d'un métal de l'un des groupes I—III de la Classification périodique des éléments, caractérisé en ce que l'on applique un constituant de titane préparé par le procédé selon l'une quelconque des revendications 1 à 8.

10. Procédé selon la revendication 9, caractérisé en ce que le constituant organométallique contient un complexe d'un composé métallique organique avec un ester d'un acide organique oxygéné.